# EUROPEAN PATENT APPLICATION

(11) **EP 4 557 266 A1**
(43) Date of publication of application: **21.05.2025**
(21) Application number: 24736640.4
(22) Date of filing: 25.06.2024
(51) Int. Cl.: G09G 3/00

(54) **DRIVING BOARD FOR CONTROLLING DISPLAY DEVICE INCLUDED IN MODULAR DISPLAY DEVICE AND CONTROL METHOD THEREFOR**

(30) Priority: 21.09.2023 KR 20230126546
(71) Applicant: Samsung Electronics Co., Ltd, Suwon-si, Gyeonggi-do 16677 (KR)
(72) Inventor: YI, Sanghun, Suwon-si, Gyeonggi-do 16677 (KR); KIM, Sangwon, Suwon-si, Gyeonggi-do 16677 (KR); LEE, Dongjun, Suwon-si, Gyeonggi-do 16677 (KR)
(74) Representative: Walaski, Jan Filip
(86) International application number: PCT/KR2024/008757
(87) International publication number: WO 2025/063437

(57) **Abstract**

The disclosure provides a driving board included in a display device among a plurality of display devices constituting a modular display device, and a method for controlling thereof. The driving board includes a connector, at least one non-volatile memory, and a timing controller configured to, at the time of booting of the driving board, obtain location data of the driving board based on a signal input through the connector, compare the obtained location data with location data stored in the at least one non-volatile memory, and identify whether the driving board is newly installed in the display device, and based on identifying that the driving board is newly installed in the display device, receive image quality data of the modular display device stored in the remaining display devices among the plurality of display devices through the connector, and store the received image quality data in the at least one non-volatile memory.

## Description

### [BACKGROUND OF THE INVENTION]

### [Field of the Invention]

The disclosure relates to a driving board for controlling a display device included in a modular display device and a method for controlling thereof, and more particularly, to a driving board that receives image quality data from the remaining display devices included in a modular display device, and a method for controlling thereof.

### [Description of the Related Art]

Recently, there is a trend that display systems in various forms are being developed and distributed. In particular, with development of display technologies according to enlargement of sizes and improvement of resolutions of display systems, sizes of screens of display devices have become diversified. In the past, only production of display devices in limited sizes was possible, but recently, production of display devices with large screens has become possible departing from the limitation in sizes of displays, and accordingly, there is a trend that use of display devices with large screens is increasing in real life. In particular, use of a modular display device that provides an expanded display screen by combining a plurality of display devices is increasing. For example, as a display device with a large screen, there is a digital signage billboard that is installed in a place where there are a large number of people passing by, such as a subway station, a bus stop, etc., and then displays an outdoor advertisement through a display device.

A modular display device can flexibly expand or reduce the size of a display screen according to the number of display devices and their combined relation, and thus it provides convenience to a user who uses a large-size display device. In the case of a modular display device, in each display device, a driving board for controlling each display device is included. Here, in case a driving board is replaced due to deterioration or a defect of the driving board, a process of inputting image quality data regarding the modular display device into the new driving board is needed. However, as such a process is directly performed by the user, wrong data may be input in the input process, and in particular, there is a problem that time and cost are wasted in that an input process of image quality data should be repeated whenever a driving board is replaced.

### [SUMMARY]

A driving board included in a display device among a plurality of display devices constituting a modular display device according to an embodiment of the disclosure includes a connector, at least one non-volatile memory, and a timing controller that controls light emission of a plurality of pixels included in a display module of the display device. The timing controller may, at the time of booting of the driving board, obtain location data of the driving board based on a signal input through the connector, compare the obtained location data with location data stored in the at least one non-volatile memory, and identify whether the driving board was initially (newly) installed in the display device, and based on identifying that the driving board was initially installed in the display device, receive image quality data of the modular display device stored in the remaining display devices among the plurality of display devices through the connector, and store the received image quality data in the at least one non-volatile memory.

The location data stored in the at least one non-volatile memory may be initially set as none, and the timing controller may, based on identifying that the location data of the driving board is an effective value based on the signal input through the connector, identify that the driving board was initially installed in the display device, and change the location data of the driving board stored in the at least one non-volatile memory to the identified effective value.

The timing controller may, based on the signal input through the connector being a low signal, identify that the driving board is a first driving board connected with the remaining display devices through the connector, and based on the signal input through the connector being a high signal, identify that the driving board is a second driving board connected with the first driving board through the connector.

The timing controller may, based on identifying that the driving board is the second driving board, request to the first driving board to transmit the image quality data of the modular display device through the connector, and the image quality data of the modular display device may have been received from the remaining display devices by the first driving board through the connector of the first driving board.

The timing controller may, based on identifying that the driving board is the first driving board of the display device, request to the remaining display devices to transmit the image quality data of the modular display device through the connector.

The timing controller may, based on identifying that the driving board was initially installed in the display device, receive the location data of the driving board included in each of the remaining display devices from each of the remaining display devices through the connector, and select a first display device that is not requested to transmit the image quality data of the modular display device among the remaining display devices based on each of the received location data.

The timing controller may compare each of the received location data with the location data stored in the at least one non-volatile memory, and select a first display device including the initially installed driving board among the remaining display devices, and not request to the selected first display device to transmit the image quality data.

To the plurality of display devices, IP addresses different from one another may be allotted, and the timing controller may sequentially request to the remaining display devices to transmit the location data of the driving boards according to the IP addresses allotted to each of the display devices.

The at least one non-volatile memory may include a flash memory, and an EEPROM storing the location data, and the timing controller may store the received image quality data in the flash memory.

A method for controlling a driving board included in a display device among a plurality of display devices constituting a modular display device according to an embodiment of the disclosure includes the step of, at the time of booting of the driving board, obtaining location data of the driving board based on a signal input through a connector of the driving board. The control method may include the step of comparing the obtained location data with location data stored in at least one non-volatile memory of the driving board, and identifying whether the driving board was initially installed in the display device. The control method may include the step of, based on identifying that the driving board was initially installed in the display device, receiving image quality data of the modular display device stored in the remaining display devices among the plurality of display devices through the connector. The control method may include the step of storing the received image quality data in the at least one non-volatile memory.

The identifying step may include the step of, based on identifying that the location data of the driving board is an effective value based on the signal input through the connector, identifying that the driving board was initially installed in the display device, and changing the location data of the driving board stored in the at least one non-volatile memory to the identified effective value, and the location data stored in the at least one non-volatile memory may be initially set as none.

The identifying step may include the steps of, based on the signal input through the connector being a low signal, identifying that the driving board is a first driving board connected with the remaining display devices through the connector, and based on the signal input through the connector being a high signal, identifying that the driving board is a second driving board connected with the first driving board through the connector.

The controlling method according to an embodiment of the disclosure may further include the step of, based on identifying that the driving board is the second driving board of the display device, requesting to the first driving board to transmit the image quality data of the modular display device through the connector, and the image quality data of the modular display device may have been received from the remaining display devices by the first driving board through the connector of the first driving board.

The controlling method according to an embodiment of the disclosure may further include the step of, based on identifying that the driving board is the first driving board of the display device, requesting to the remaining display devices to transmit the image quality data of the modular display device through the connector.

The receiving step may include the steps of, based on identifying that the driving board was initially installed in the display device, receiving the location data of the driving board included in each of the remaining display devices from each of the remaining display devices through the connector, and selecting a first display device that is not requested to transmit the image quality data of the modular display device among the remaining display devices based on each of the received location data.

In the selecting step, each of the received location data may be compared with the location data stored in the at least one non-volatile memory, and a first display device including the initially installed driving board may be selected among the remaining display devices, and it may not be requested to the selected first display device to transmit the image quality data.

In the requesting step, it may be sequentially requested to the remaining display devices to transmit the location data of the driving boards according to the IP addresses allotted to each of the display devices.

The storing step may include the step of storing the received image quality data in a flash memory included in the at least one non-volatile memory, and the at least one non-volatile memory may further include an EEPROM storing the location data.

In a computer-readable recording medium including a program executing a method for controlling a driving board of a display device included in a modular display device according to an embodiment of the disclosure, the method for controlling a driving board includes the step of, at the time of booting of the driving board, obtaining location data of the driving board based on a signal input through a connector of the driving board. The operation may include the step of comparing the obtained location data with location data stored in at least one non-volatile memory of the driving board, and identifying whether the driving board was initially installed in the display device. The operation may include the step of, based on identifying that the driving board was initially installed in the display device, receiving image quality data of the modular display device stored in the remaining display devices among the plurality of display devices through the connector. The operation may include the step of storing the received image quality data in the at least one non-volatile memory.

### [BRIEF DESCRIPTION OF THE DRAWINGS]

FIG. 1 is an exemplary diagram illustrating a modular display device;
FIG. 2 is a diagram for illustrating a modular display device wherein a plurality of display devices are combined;
FIG. 3 is a block diagram for illustrating a modular display device;
FIG. 4 is a block diagram for illustrating a display device;
FIG. 5 is a block diagram for illustrating a driving board;
FIG. 6 is an exemplary diagram of a modular display device including a plurality of driving boards;
FIG. 7 is an exemplary diagram for illustrating a method for a plurality of driving boards to control a display device; and
FIG. 8 is a sequence diagram schematically illustrating a method for controlling a driving board.

### [DETAILED DESCRIPTION]

First, terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. Further, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, or alternatives of the embodiments included in the ideas and the technical scope disclosed herein. Meanwhile, in case it is determined that in describing embodiments, detailed explanation of related known technologies may unnecessarily confuse the gist of the disclosure, the detailed explanation will be omitted.

In addition, terms such as 'the first,' 'the second,' etc. may be used to describe various elements, but the terms are not intended to limit the elements. The terms may be used only for the purpose of distinguishing one element from another element.

Further, singular expressions include plural expressions as long as they do not obviously mean differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Also, in the disclosure, "a module" or "a unit" may perform at least one function or operation, and may be implemented as hardware or software, or as a combination of hardware and software. Further, a plurality of "modules" or "units" may be integrated into at least one module and implemented as at least one processor (not shown), excluding "a module" or "a unit" that needs to be implemented as specific hardware.

Hereinafter, the embodiments of the disclosure will be described in detail with reference to the accompanying drawings, such that those having ordinary skill in the art to which the disclosure belongs can easily carry out the disclosure. However, it should be noted that the disclosure may be implemented in various different forms, and is not limited to the embodiments described herein. Also, in the drawings, parts that are not related to explanation were omitted, for explaining the disclosure clearly, and throughout the specification, similar components were designated by similar reference numerals.

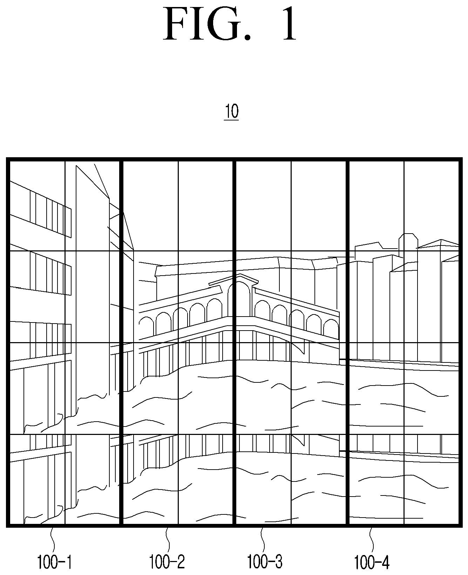

FIG. 1 is an exemplary diagram illustrating a modular display device.

A modular display device 10 may include a plurality of display devices 100-1, 100-2, 100-3, 100-4.

For example, referring to FIG. 1, the modular display device 10 may include a plurality of display devices 100-1, 100-2, 100-3, 100-4, and each of the plurality of display devices 100-1, 100-2, 100-3, 100-4 may be connected by various methods (e.g., a daisy chain method, etc.), and constitute one display device, i.e., the modular display device 10.

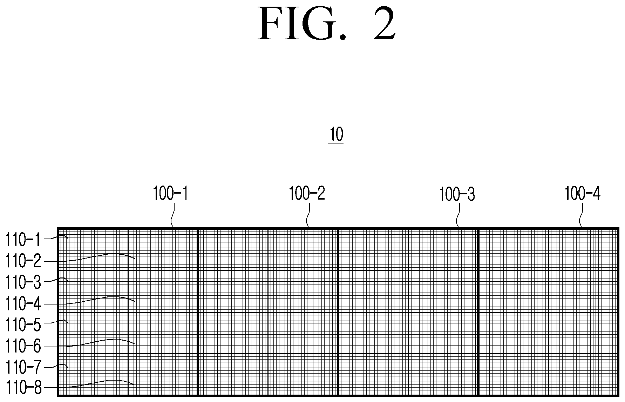

FIG. 2 is a diagram for illustrating a modular display device wherein a plurality of display devices are combined.

Referring to FIG. 2, the modular display device 10 may include the plurality of display devices 100-1, 100-2, 100-3, 100-4, and the modular display device 10 may display an image by using the plurality of display devices 100-1, 100-2, 100-3, 100-4.

For example, the modular display device 10 may include the plurality of display devices 100-1, 100-2, 100-3, 100-4 arranged in a matrix form (e.g., a 1 x 4 form). Meanwhile, a 1 x 4 form is merely an example for the convenience of explanation, and it is obvious that the arrangement form, the number, etc. of the plurality of display devices 100-1, 100-2, 100-3, 100-4 constituting the modular display device 10 can obviously be changed variously according to the specification (e.g., the resolution, the size, etc.) of the modular display device 10, the manufacturing purpose of the manufacturer, the installation environment (e.g., indoor, outdoor, etc.) of the modular display device 10, etc. However, hereinafter, explanation will be described by assuming that the four display devices 100-1 to 100-4 arranged in a matrix form of 1 x 4 are included in the modular display device 10, for the convenience of explanation of the disclosure.

The modular display device 10 may be implemented as a TV, but is not limited thereto, and any device equipped with a display function such as a video wall, a large format display (LFD), digital signage, a digital information display (DID), a projector display, etc. can be applied without limitation.

Also, the modular display device 10 may be implemented as displays in various forms such as a liquid crystal display (LCD), organic light-emitting diodes (OLEDs), Liquid Crystal on Silicon (LCoS), Digital Light Processing (DLP), a quantum dot (QD) display panel, quantum dot light-emitting diodes (QLEDs), etc. Meanwhile, the modular display device 10 may also be referred to as a display system in that it is implemented as the plurality of display devices 100-1, 100-2, 100-3, 100-4.

Each of the plurality of display devices 100-1, 100-2, 100-3, 100-4 may include a plurality of self-luminescence elements. Here, the self-luminescence elements may be at least one of light-emitting diodes (LEDs) or micro LEDs. The micro LEDs are LEDs in a size of about 5 - 100 micrometers, and they are micro-mini light-emitting elements emitting light by themselves without a color filter.

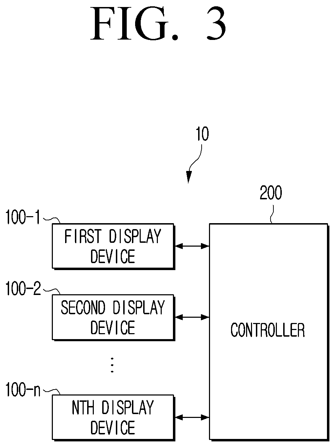

FIG. 3 is a block diagram for illustrating a modular display device.

Referring to FIG. 3, the modular display device 10 includes a plurality of display devices 100-1 to 100-n, n is a natural number which is 2 or greater) and a controller 200.

Each of the plurality of display devices 100-1 to 100-n (referred to as 100 hereinafter) may receive various signals from the controller 200, or transmit various signals and data to the controller 200. For example, each of the plurality of display devices 100 may be connected to the controller 200 via wire/wirelessly, and receive a control signal, a driving signal, etc. from the controller 200.

In particular, the plurality of display devices 100 may perform Ethernet communication with the controller 200 through a connector included in each display device. For this, to the connector of each display device 100-1 to 100-4, a cable connecting each display device 100-1 to 100-4 and the controller 200 may be connected.

Here, the cable connecting each display device 100-1 to 100-4 and the controller 200 may also perform the function of a data path among the plurality of display devices 100. That is, each display device 100-1 to 100-4 may perform Ethernet communication with another display device as well as the controller 200 through the cable, and transmit or receive various signals and data.

The controller 200 includes at least one processor, and the at least one processor controls the overall operations of the modular display device 10.

The at least one processor may be implemented as a digital signal processor (DSP) processing digital signals, a microprocessor, and a timing controller (TCON). However, the disclosure is not limited thereto, and the at least one processor may include one or more of a central processing unit (CPU), a micro controller unit (MCU), a micro processing unit (MPU), a controller, an application processor (AP) or a communication processor (CP), an ARM processor, and an artificial intelligence (AI) processor, or may be defined by the terms. Also, the at least one processor may be implemented as a system on chip (SoC) having a processing algorithm stored therein or large scale integration (LSI), or in the form of a field programmable gate array (FPGA). The at least one processor may perform various functions by executing computer executable instructions stored in the memory.

The at least one processor may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or a random combination of the other components of the electronic device, and perform an operation related to communication or data processing. Also, the at least one processor may execute one or more programs or instructions stored in the memory. For example, the at least one processor may perform the method according to an embodiment by executing the one or more instructions stored in the memory.

In case the method according to an embodiment includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor may be implemented as a single core processor including one core, or it may be implemented as one or more multicore processors including a plurality of cores (e.g., multicores of the same kind or multicores of different kinds). In case the at least one processor is implemented as multicore processors, each of the plurality of cores included in the multicore processors may include an internal memory of the processor such as a cache memory, an on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second co re included in the multicore processors.

The processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but are not limited thereto.

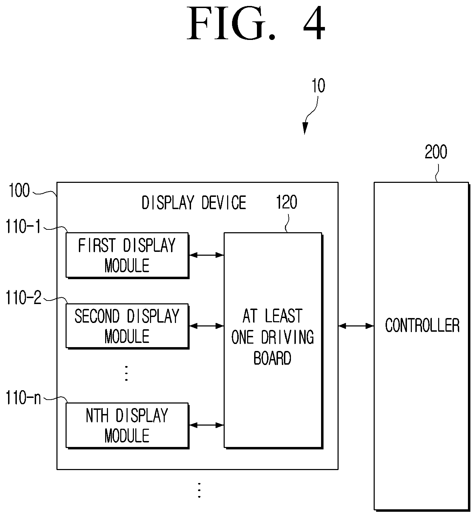

FIG. 4 is a block diagram for illustrating a display device. The display device 100 in FIG. 4 may be any one of the plurality of display devices 100 described above. Meanwhile, the plurality of display devices 100 included in the modular display device 10 of the disclosure are devices having the same configuration, and share the characteristics regarding the display devices explained in the disclosure.

Referring to FIG. 4, the display device 100 includes a plurality of display modules 110-1, 110-2, ..., 110-n (n is a natural number which is 2 or greater, referred to as 110 hereinafter), and at least one driving board 120.

The display device 100 may be implemented as displays in various forms such as a liquid crystal display (LCD), an organic light-emitting diode (OLED) display, light-emitting diodes (LEDs), micro LEDs, mini LEDs, a plasma display panel (PDP), a quantum dot (QD) display, quantum dot light-emitting diodes (QLEDs), etc. Inside the display device 100, driving circuits that may be implemented in forms such as an a-Si TFT, a low temperature poly silicon (LTPS) TFT, an organic TFT (OTFT), etc., and a backlight unit, etc. may also be included together.

Meanwhile, the display device 100 may be implemented as a touch screen combined with a touch sensor, a flexible display, a rollable display, a 3D display, a display in which a plurality of display modules are physically connected, etc.

The plurality of display modules 110-1, 110-2, ..., 110-n (referred to as 110 hereinafter) according to an embodiment may include a plurality of driver ICs and a plurality of light-emitting elements. Each of the plurality of driver ICs may receive a driving signal from the driving board 120 (more specifically, a timing controller included in the driving board 120), and control corresponding light-emitting elements among the plurality of light-emitting elements based on the received driving signal.

As an example, each of the plurality of light-emitting elements may be at least one self-luminescence element from among a light-emitting diode (LED) or a micro LED. Here, a micro LED is an LED in a size of about 5 - 100 micrometers, and it is a micro-mini light-emitting element emitting light by itself without a color filter.

Meanwhile, the display device 100 may further include a power supply for supplying power to the components included in the display device 100 (e.g., the plurality of display modules 110, the driving board 120, etc.).

The at least one driving board 120 controls the overall operations of the display device 100. Specifically, the at least one driving board 120 may receive image data from the controller 200 of the modular display device 10, and control the plurality of pixels included in the plurality of display modules 110 of the display device 100 based on the received image data.

In particular, the at least one driving board 120 may control the luminance, the gray scale, etc. of a light-emitting element corresponding to each pixel based on the image data, and may thereby output images corresponding to the image data received from the controller 200 through the plurality of display modules 110. Meanwhile, the image data received by the driving board 120 from the controller 200 may be data regarding images that divided the entire image correspondingly to the location of the display device 100 in the modular display device 10.

As an example, the display device 100 may include a plurality of driving boards 120. Here, the plurality of driving boards 120 included in the display device 100 may separately control the plurality of display modules included in the display device 100.

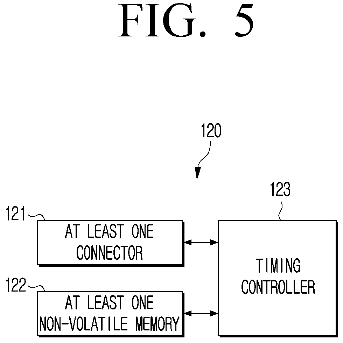

FIG. 5 is a block diagram for illustrating a driving board. The driving board 120 in FIG. 5 may be any one among at least one driving board included in each of the plurality of display devices 100. Meanwhile, the at least one driving board included in each of the plurality of display devices 100 constituting the modular display device 10 of the disclosure is a device having the same configuration, and shares the characteristics claimed in the disclosure.

Referring to FIG. 5, the driving board 120 includes at least one connector 121, at least one non-volatile memory 122, and a timing controller 123. The driving board 120 may also be referred to as a timing controller board or a t-con board, etc.

The at least one connector 121 may be a component by which the driving board 120 receives input of various signals and data from the controller 200 of the modular display device 10 or a driving board of another display device. As an example, the timing controller 123 may receive image data corresponding to the display device 100 through the connector 121, or receive image quality data regarding image data from a driving board included in another display device. Also, through the connector 121, the driving board 120 may transmit various signals and data to the controller 200 of the modular display device 10 or a driving board of another display device.

Meanwhile, the driving board 120 may include a general-purpose input/output (GPIO) terminal for identifying location data of the driving board 120. Here, the timing controller of the driving board 120 may determine whether the driving board 120 was initially installed (also referred to as "is newly installed") in the display device 100 according to a change of a voltage level of the GPIO terminal, and also identify the location of the driving board 120 in the display device 100.

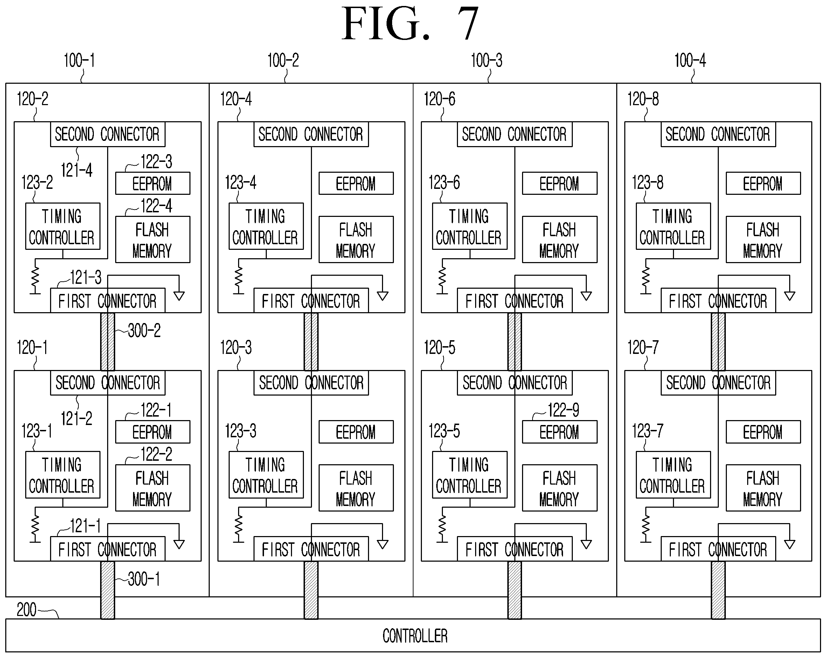

Also, the driving board 120 may include a plurality of connectors. As an example, the driving board 120 may include first and second connectors. Here, the first and second connectors may be arranged in different locations in the driving board 120, and may be divided according to a device (or a component) to which the driving board 120 is connected through the connector. In this regard, detailed explanation will be described in FIG. 7.

In the at least one non-volatile memory 122, an operating system (O/S) for driving the display device 100, software programs, and various data may be stored. In particular, location data of the at least one non-volatile memory display device 100 may be stored. Here, the location data may be data for identifying the location of the driving board 120 in the display device 100. In particular, the display device 100 may include a plurality of driving boards. Here, the location data may be used for identifying the location of each driving board in the display device 100.

Also, in the at least one non-volatile memory 122, image quality data may be stored. Here, the image quality data is compensation data for performing image quality compensation of the display device 100, and may include image quality compensation data corresponding to a driving frequency of the display device 100 and image quality compensation data corresponding to a frame frequency of an image input into each display module 110. For example, the image quality data may include gamma correction data, a color coordinate compensation look up table (LUT), a response speed improvement look up table, etc.

Meanwhile, the driving board 120 may include a plurality of non-volatile memories. Specifically, the driving board 120 may include a first non-volatile memory and a second non-volatile memory, and here, the first and second non-volatile memories may be divided according to the type of the stored data. Specifically, in the first non-volatile memory, location data may be stored, and in the second non-volatile memory, image quality data may be stored. Here, the first non-volatile memory storing location data of which data size is relatively small may be implemented as an EEPROM, and the second non-volatile memory storing image quality data of which data size is relatively big may be implemented as a flash memory. Here, the flash memory may include a NAND flash memory, a NOR flash memory, etc.

The timing controller 123 controls the overall operations of the display device 100 and the driving board 120. The timing controller 123 controls light emission of the plurality of pixels included in each of the plurality of display modules 110 of the display device 100. Specifically, the timing controller 123 may receive image data from the controller 200 of the modular display device 10 through the connector 121 of the driving board 120, and control the plurality of pixels included in the plurality of display modules 110 of the display device 100 based on the received image data.

For this, the timing controller 123 may also be implemented as a digital signal processor (DSP) processing digital signals, a microprocessor, etc.

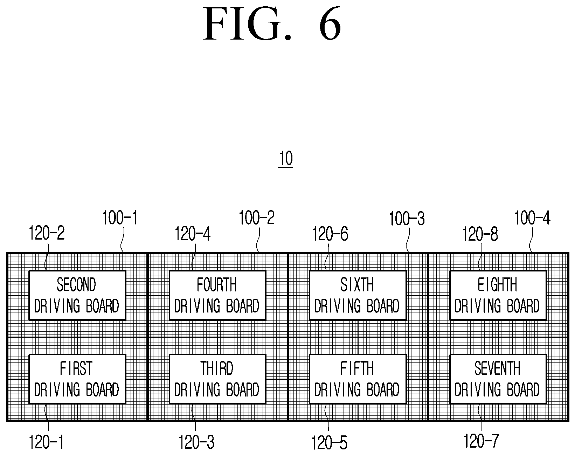

FIG. 6 is an exemplary diagram of a modular display device including a plurality of driving boards. FIG. 7 is an exemplary diagram for illustrating a method for a plurality of driving boards to control a display device.

In FIG. 6 and FIG. 7, it was illustrated that the modular display device 10 includes four display devices 100-1 to 100-4, but this is just for the convenience of explanation of the disclosure, and it is obvious that the number and the arrangement form of the plurality of display devices included in the modular display device 10 can be changed variously depending on embodiments.

Meanwhile, each of the plurality of display devices 100 constituting the modular display device may include a plurality of driving boards. Specifically, each display device 100-1 to 100-4 may include a plurality of driving boards that separately control the plurality of display modules included in each display device 100-1 to 100-4. That is, the plurality of driving boards included in the same display device control a plurality of different display modules among the plurality of display modules included in the display device.

Referring to FIG. 6, in the first display device 100-1, a first driving board 120-1 and a second driving board 120-2 may be included, and in the second display device 100-2, a third driving board 120-3 and a fourth driving board 120-4 may be included, and in the third display device 100-3, a fifth driving board 120-5 and a sixth driving board 120-6 may be included, and in the fourth display device 100-4, a seventh driving board 120-7 and an eighth driving board 120-8 may be included. Here, the plurality of driving boards 120-1 to 120-8 included in each display device 100-1 to 100-4 may separately drive or control the plurality of display modules included in each display device 100-1 to 100-4.

That is, the first driving board 120-1 included in the first display device 100-1 may control four display modules arranged in the lower part of the first display device 100-1, and the second driving board 120-2 may control four display modules arranged in the upper part of the first display device 100-1. Likewise, the third driving board 120-3 included in the second display device 100-2 may control four display modules arranged in the lower part of the second display device 100-2, and the fourth driving board 120-4 may control four display modules arranged in the upper part of the second display device 100-2. Also, the fifth driving board 120-5 included in the third display device 100-3 may control four display modules arranged in the lower part of the third display device 100-3, and the sixth driving board 120-6 may control four display modules arranged in the upper part of the third display device 100-3. In addition, the seventh driving board 120-7 included in the fourth display device 100-4 may control four display modules arranged in the lower part of the fourth display device 100-4, and the eighth driving board 120-8 may control four display modules arranged in the upper part of the fourth display device 100-4.

Referring to FIG. 7, the first driving board 120-1 included in the first display device 100-1 may be connected with the controller 200 of the modular display device 10 through a first connector 121-1 of the first driving board 120-1. Specifically, a timing controller 123-1 of the first driving board 120-1 may perform Ethernet communication with the controller 200 and the driving boards 120-3 to 120-8 included in the other display devices 100-2 to 100-3 through an Ethernet cable 300-1 connected to the first connector 121-1 of the first driving board 120-1.

Meanwhile, the first driving board 120-1 may be connected with the second driving board 120-2 through a cable 300-2 connected to a second connector 121-2 of the first driving board 120-1. That is, the second driving board 120-2 may be connected with the first driving board 120-1 through the cable 300-2 connected to a first connector 121-3 of the second driving board 120-2. Accordingly, a timing controller 123-2 of the second driving board 120-2 may perform Ethernet communication with the controller 200 and the timing controllers 123-3 to 123-8 of the driving boards 120-3 to 120-8 included in the other display devices 100-2 to 100-3 through the first driving board 120-1. This may also be applied identically to the plurality of driving boards 120-3 to 120-8 included in each of the second to fourth display devices 100-2 to 100-4.

Meanwhile, as the first driving board 120-1 directly performs Ethernet communication with the controller 200 of the modular display device 10 and the driving boards included in the other display devices (i.e., the second to fourth display devices 100-2 to 100-4), the first driving board 120-1 may be referred to as a primary driving board. In contrast, as the second driving board 120-2 indirectly performs Ethernet communication with the controller 200 of the modular display device 10 and the driving boards (i.e., the third to eighth driving boards 120-2 to 120-8) included in the other display devices (i.e., the second to fourth display devices 100-2 to 100-4) through the first driving board 120-1, the second driving board 120-2 may be referred to as a secondary driving board.

That is, in the four display devices 100-1 to 100-4 illustrated in FIG. 7, each of the first driving board 120-1, the third driving board 120-3, the fifth driving board 120-5, and the seventh driving board 120-7 may be the primary driving boards of each of the display devices 100-1 to 100-4, and the second driving board 120-2, the fourth driving board 120-4, the sixth driving board 120-6, and the eighth driving board 120-8 may be the secondary driving boards of each of the display devices 100-1 to 100-4.

Meanwhile, in case the driving board 120 is newly installed in the display device 100, the timing controller 123 may obtain image quality data necessary for controlling light emission of the plurality of pixels (more specifically, the plurality of light-emitting elements corresponding to each of the plurality of pixels) included in the display module 110 from another driving board. That is, in the case that the driving board 120 is newly installed in the display device 100, image quality data is not stored in the at least one non-volatile memory 122. Alternatively, in the driving board 120, basic image quality data may be stored. Here, the basic image quality data is compensation data for initially performing image compensation of the display device 100, and it may be compensation data that was set without considering the characteristics of the modular display device 10 (specifically, the characteristics of the plurality of display devices 100 (e.g., the number, the arrangement form, etc. of the plurality of display devices) included in the modular display device 10). This is different from the image quality data stored in the at least one non-volatile memory of another driving board that was previously installed.

That is, in the case that the driving board 120 is newly installed in the display device 100, image quality data that was set by reflecting the characteristics of the modular display device is not stored in the at least one non-volatile memory 122 of the driving board 120.

Here, as the image quality data is applied identically in each driving board included in the plurality of display devices, the data may be stored in the at least one non-volatile memory of another driving board. Accordingly, the timing controller 123 may obtain image quality data stored in another driving board (more specifically, stored in the non-volatile memory of another driving board). For this, the timing controller 123 needs to first identify whether the driving board 120 is newly installed in the display device 100. Hereinafter, an embodiment in this regard will be explained.

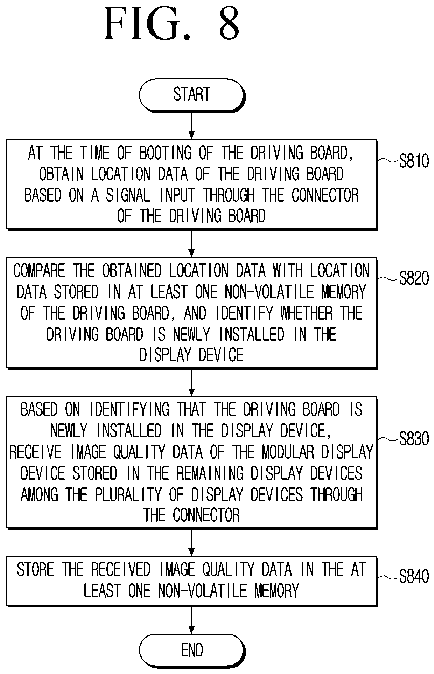

FIG. 8 is a sequence diagram schematically illustrating a method for controlling a driving board according to an embodiment.

Referring to FIG. 8, at the time of booting of the driving board 120, the timing controller 123 may obtain location (position) data of the driving board based on a signal input through the connector 121 in operation S810.

Specifically, the timing controller 123 may boot the driving board 120. For example, the timing controller 123 may perform booting of the driving board 120 by using an O/S stored in the at least one non-volatile memory 122. For this, in the at least one non-volatile memory 122, an instruction set for booting of the driving board 120 may be stored. When power for the driving board 120 is supplied, the timing controller 123 may execute the O/S according to the instructions stored in the at least one non-volatile memory 122, and boot the driving board 120.

Then, when the timing controller 123 is booted as the driving board 120 was booted, a signal input into the timing controller 123 is detected. In particular, the timing controller 123 may detect a signal input through any one terminal among a plurality of terminals (or pins) included in the timing controller 123. As an example, the timing controller 123 may detect a voltage level (or a voltage value) input through a GPIO terminal included in the timing controller 123. Here, the voltage level input through the GPIO terminal may vary according to a device (or a cable) to which the driving board 120 is connected through the connector 121.

Here, a different voltage level may be detected through the GPIO terminal according to whether the driving board 120 is connected with another driving board through the connector 121. More specifically, the GPIO terminal of the timing controller 123 may be electrically connected with the connector 121. For example, the GPIO terminal of the timing controller 123 may be electrically connected with the connector 121 through an electric wire connecting the GPIO terminal of the timing controller 123 and a specific pin included in the connector 121.

In particular, in case a plurality of connectors are included in the driving board 120, the GPIO terminal of the timing controller 123 may be electrically connected with any one connector among the plurality of connectors, and to the GPIO terminal, a different voltage level or a signal of a different type may be input according to whether the driving board 120 is connected with another driving board through the electrically connected connector. Hereinafter, the connector 121 electrically connected with the GPIO terminal of the timing controller 123 among the plurality of connectors included in the driving board 120 will be referred to as the second connector 121-2, and the connector 121 that is not electrically connected with the GPIO terminal of the timing controller 123 among the plurality of connectors will be referred to as the first connector 121-1.

As an example, if the driving board 120 is connected with another driving board of the modular display device 10 through the second connector 121-2, a voltage level input into (or applied to) the GPIO terminal through the second connector 121-2 may be 0V. Here, the timing controller 123 may identify that a signal input into the GPIO terminal (or a signal input into the GPIO terminal through the second connector 121-2) is a low level (for example a logic low).

In contrast, if the driving board 120 is not connected with another driving board through the second connector 121, a voltage level input into (or applied to) the GPIO terminal through the second connector 121-2 may be 3.3V. Here, the timing controller 123 may identify that a signal input into the GPIO terminal (or a signal input into the GPIO terminal through the second connector 121-2) is a high level (for example a logic high). Meanwhile, the value of the voltage level may be set as various values other than 3.3V, as long as the two voltage levels are distinguishable as relatively low and relatively high.

Referring to FIG. 7, the first driving board 120-1 included in the first display device 100-1 is connected with the second driving board 120-2 as the cable 300-2 connected to the second connector 121-2 of the first driving board 120-1 is connected to the first connector 121-3 of the second driving board 120-2. Specifically, the GPIO terminal of the timing controller 123-1 of the first driving board 120-1 included in the first display device 100-1 may be electrically connected with a GND pin included in the first connector 121-3 of the second driving board 120-2 through the second connector 121-2 of the first driving board 120-1. That is, the GPIO terminal of the first timing controller 123-1 of the first driving board 120-1 may be connected with the GND. By this, to the GPIO terminal of the first timing controller 123-1 of the first driving board 120-1, a voltage of 0V may be input. Accordingly, the timing controller 123-1 of the first driving board 120-1 may identify a signal input into the GPIO terminal of the first timing controller 123-1 through the second connector 121-2 of the first driving board 120-1 as a low level. This may also be the same for the third driving board 120-3, the fifth driving board 120-5, and the seventh driving board 120-7 included in each of the second to fourth display devices 100-2 to 100-4.

In contrast, in the case of the second driving board 120-2 included in the first display device 100-1, the second driving board 120-2 is not connected with another driving board through the second connector 121-4. Accordingly, at the GPIO terminal of the timing controller 123-2 of the second driving board 120-2, electric connection is not performed. That is, the GPIO terminal of the timing controller 123-2 is not connected with the GND. Accordingly, a voltage of 3.3V may be input into the GPIO terminal of the second timing controller 123-2 through the second connector 121-4 of the second driving board 120-2, and the second timing controller 123-2 may identify a signal input through the GPIO terminal as a high level. This may also be the same for the fourth driving board 120-4, the sixth driving board 120-6, and the eighth driving board 120-8 included in each of the second to fourth display devices 100-2 to 100-4.

Meanwhile, the timing controller 123 may obtain location data of the driving board 120 based on a signal input into the GPIO terminal through the connector 121. The location data may be data that is used for identifying whether the driving board 120 is newly installed in the display device 100. Also, the location data may be data that is used for identifying the location of the driving board 120 in the display device 100. In case a signal input into the GPIO terminal through the connector 121 is a low level, the timing controller 123 may identify that the driving board 120 is the primary driving board, and obtain location data corresponding to the primary driving board. For example, the timing controller 123 may obtain the location data as a "primary" value. In contrast, in case a signal input into the GPIO terminal through the connector 121 is a high level, the timing controller 123 may identify that the driving board 120 is the secondary driving board, and obtain location data corresponding to the secondary driving board. For example, the timing controller 123 may obtain the location data as a "secondary" value. The location data may be considered as a location flag having the value 'primary' or 'secondary' indicating that the driving board is a primary driving board or a secondary driving board respectively.

Specifically, referring to FIG. 7, the first timing controller 123-1 of the first driving board 120-1 included in the first display device 100-1 may detect a signal of a low level input into the GPIO terminal through the second connector 121-2 of the first driving board 120-1 as the GPIO terminal of the first timing controller 123-1 is connected to the GND through the second connector 121-2. Then, the first timing controller 123-1 of the first driving board 120-1 may obtain the location data of "the primary."

In contrast, the second timing controller 123-2 of the second driving board 120-2 included in the first display device 100-1 may detect a signal of a high level input into the GPIO terminal through the second connector 121-4 of the second driving board 120-2 as the GPIO terminal of the second timing controller 123-2 is not connected to the GND through the second connector 121-4. Then, the second timing controller 123-2 of the second driving board 120-2 may obtain the location data of "the secondary."

Meanwhile, after obtaining (S810) location data, the timing controller 123 may compare the obtained location data with the location data stored in the at least one non-volatile memory 122, and identify whether the driving board 120 is newly installed in the display device 100 in operation S820.

Specifically, the timing controller 123 may compare the obtained location data with the location data stored in the at least one non-volatile memory 122. As an example, location data may be stored in the EEPROM included in the at least one non-volatile memory 122, and the timing controller 123 may extract the location data stored in the EEPROM, and compare the extracted location data and the obtained location data. Then, if it is identified that the location data stored in the EEPROM and the obtained location data are different, the timing controller 123 identifies that the driving board 120 is newly installed in the display device 100.

As an example, the location data stored in the at least one non-volatile memory 122 may be initially set as a none value, in other words as 'none', indicating the absence of valid location data or that no location data is set. Then, if the location data of the driving board 120 is identified as an effective value, also referred to as a valid or recognised or permitted value, based on a signal input into the GPIO terminal through the connector 121, the timing controller 123 may identify that the driving board 120 is newly installed in the display device 100, as a result of the difference between the stored location data and the obtained location data. For example, in the embodiment described, the location data or flag may have the values 'primary', 'secondary' or 'none', where 'primary' and 'secondary' are valid/recognised/permitted values and 'none' indicates the absence of location data. It will be understood by the skilled person that the location data is not limited to this and can be changed depending on the configuration of driving boards. Additionally, other flag data/values can be used to indicate that the driving board is a primary board or a secondary board.

For example, in the case that the location data extracted from the at least one non-volatile memory 122 is a none value, and the obtained location data is a value of 'primary' or 'secondary', the timing controller 123 may identify that the driving board 120 is newly installed in the display device 100. Accordingly, in case the location data extracted from the at least one non-volatile memory 122 is a valid value (i.e., indicating the primary or the secondary), the timing controller 123 can identify that the driving board 120 is not newly installed in the display device 100.

Referring to FIG. 7, in the case that the first driving board 120-1 of the first display device 100-1 is newly installed in the first display device 100-1, the location data stored in the EEPROM 122-1 of the first driving board 120-1 may be a none value, ie. holds a value representing 'none'. Here, the first timing controller 123-1 of the first driving board 120-1 may obtain the location data of "the primary" based on a signal input into the GPIO terminal through the second connector 121-2 of the first driving board 120-1. Then, the first timing controller 123-1 of the first driving board 120-1 may compare the stored location data (a none value) and the obtained location data ("the primary"), and identify that the obtained location data ("the primary") differs from the stored location data. As a result, the first timing controller 123-1 of the first driving board 120-1 identifies that the first driving board 120-1 is newly installed in the first display device 100-1. Here, the first timing controller 123-1 of the first driving board 120-1 may receive the Ethernet IP address information of the first display device 100-1 based on an Ethernet IP protocol from the controller 200 of the modular display device 10, and identify that the display device 100 wherein the first driving board 120-1 is installed is the first display device 100-1 based on the received IP address information.

Meanwhile, in the case that the second driving board 120-2 of the first display device 100-1 is newly installed, the location data stored in the EEPROM 122-3 of the second driving board 120-2 is a none value. Here, the second timing controller 123-2 of the second driving board 120-2 may obtain the location data of "the secondary" based on a signal input into the GPIO terminal through the second connector 121-4 of the second driving board 120-2. Then, the second timing controller 123-2 of the second driving board 120-2 may compare the stored location data (a none value) and the obtained location data ("the secondary"), and identify that the obtained location data ("the secondary") differs from the stored location data. As a result, the second timing controller 123-2 of the second driving board 120-2 identifies that the second driving board 120-2 is newly installed in the first display device 100-1. Here, the second timing controller 123-2 of the second driving board 120-2 may receive the Ethernet IP address information of the first display device 100-1 from the first driving board 120-1, and identify that the display device 100 in which the second driving board 120-2 is installed is the first display device 100-1 based on the received IP address information.

Meanwhile, the timing controller 123 may change the location data of the driving board 120 stored in the at least one non-volatile memory 122 to the obtained location data.

That is, if it is identified that the driving board 120 is newly installed in the display device 100, the timing controller 123 changes the value (none) of the location data stored in the at least one non-volatile memory 122 to a valid value (the primary or the secondary) of the location data. Accordingly, at the time of booting of the driving board 120 afterwards, the timing controller 123 will identify that the driving board 120 was previously installed (i.e. not newly installed) in the display device 100 based on the location data having a valid value stored in the at least one non-volatile memory 122.

Meanwhile, if it is identified that the driving board 120 is newly installed in the display device 100, the timing controller 123 may receive image quality data of the modular display device 10 stored in the other (remaining) display devices among the plurality of display devices included in the modular display device 10 through the connector 121 in operation S830.

Specifically, if it is identified that the driving board 120 is newly installed in the display device 100, the timing controller 123 may request to the remaining display devices (or any one of the remaining display devices) to transmit image quality data necessary for driving the plurality of display modules 110 (or the plurality of light-emitting elements corresponding to the plurality of pixels included in the plurality of display modules 110). Here, the remaining display devices may be at least one display device excluding the display device that includes the newly installed driving board among the plurality of display devices included in the modular display device 10.

For example, referring to FIG. 7, if it is identified that the first driving board 120-1 is newly installed in the first display device 100-1, the first timing controller 123-1 of the first driving board 120-1 may request to the second to fourth display devices 100-2 to 100-4 to transmit the image quality data. Specifically, the first timing controller 123-1 of the first driving board 120-1 may request to the second to fourth display devices 100-2 to 100-4 to transmit the image quality data through the Ethernet communication cable 300-1.

Here, if the driving board 120 is identified as the primary driving board of the display device 100, the timing controller 123 may request to the remaining display devices (or any one of the remaining display devices) to transmit the image quality data of the modular display device through the connector 121.

Specifically, referring to FIG. 7, the first timing controller 123-1 of the first driving board 120-1 may identify that the first driving board 120-1 is the primary driving board of the first display device 100-1 based on a signal of a low level input into the GPIO terminal through the second connector 121-2. Here, the first timing controller 123-1 of the first driving board 120-1 may request to the driving boards (i.e., the third to eighth driving boards 120-3 to 120-8) included in each of the second to fourth display devices 100-2 to 100-4 connected through the first connector 121-1 to transmit the image quality data. In particular, the first timing controller 123-1 of the first driving board 120-1 may request to the primary driving boards 120-3, 120-5, and 120-7 included in each of the second to fourth display devices to transmit the image quality data. Also, the first timing controller 123-1 of the first driving board 120-1 may request to the second driving board 120-2 installed in the same first display device 100-1 to transmit the image quality data through the second connector 121-2 of the first driving board 120-1. Here, the second timing controller 123-2 of the second driving board 120-2 may transmit the image quality data stored in the flash memory 122-4 of the second driving board 120-2 to the first timing controller 123-1 of the first driving board 120-1 through the first connector 121-3 of the second driving board 120-2.

Meanwhile, if the driving board 120 is identified as a secondary driving board, the timing controller 123 may request to the primary driving board to transmit the image quality data of the modular display device 10 through the connector 121. Here, the image quality data of the modular display device 10 may have been received by the primary driving board from the remaining display devices through the connector of the primary driving board.

Specifically, referring to FIG. 7, the second timing controller 123-2 of the second driving board 120-2 may identify that the second driving board 120-2 is the secondary driving board of the first display device 100-1 based on a signal of a high level input into the GPIO terminal through the second connector 121-4. Here, the second timing controller 123-2 of the second driving board 120-2 may request to the first timing controller 123-1 of the first driving board 120-1 connected through the first connector 121-3 to transmit the image quality data.

Here, the first timing controller 123-1 of the first driving board 120-1 may transmit the image quality data stored in the flash memory 122-2 of the first driving board 120-1 to the second timing controller 123-2 of the second driving board 120-2 through the second connector 121-2 of the first driving board 120-1. Alternatively, the first timing controller 123-1 of the first driving board 120-1 may request to the driving boards (i.e., the third to eighth driving boards 120-3 to 120-8) included in each of the second to fourth display devices 100-2 to 100-4 to transmit the image quality data through the first connector 121-1 of the first driving board 120-1.

In particular, the first timing controller 123-1 of the first driving board 120-1 may request to the primary driving boards 120-3, 120-5, and 120-7 included in each of the second to fourth display devices to transmit the image quality data. Then, the first timing controller 123-1 of the first driving board 120-1 may transmit the image quality data received from the second to fourth display devices 100-2 to 100-4 to the second timing controller 123-2 of the second driving board 120-2. Accordingly, the second timing controller 123-2 of the second driving board 120-2 may receive the image quality data from the first timing controller 123-1 of the first driving board 120-1 through the first connector 121-3 of the second driving board 120-2.

Meanwhile, if it is identified that the driving board 120 is newly installed in the display device 100, the timing controller 123 may receive each of the location data of the driving board included in each of the remaining display devices from the remaining display devices through the connector 121.

Specifically, if it is identified that the driving board 120 is newly installed in the display device 100, the timing controller 123 may request to the timing controller of each driving board included in each of the remaining display devices to transmit the location data stored in the at least one non-volatile memory of each driving board through the connector 121. Then, the timing controller 123 may receive the location data from the timing controller of each driving board included in each of the remaining display devices through the connector 121. Meanwhile, in the location data, the IP address information of the display device wherein each driving board is installed may be included.

For example, referring to FIG. 7, if it is identified that the first driving board 120-1 is newly installed in the first display device 100-1, the first timing controller 123-1 of the first driving board 120-1 may request to the timing controllers (i.e., the third to eighth timing controllers 123-3 to 123-8) of the driving boards (i.e., the third to eighth driving boards 120-3 to 120-8) included in each of the second to fourth display devices 100-2 to 100-4 to transmit the location data stored in the EEPROM of each driving board (i.e., the third to eighth driving boards 120-3 to 120-8), before requesting to the timing controllers (i.e., the third to eighth timing controllers 123-3 to 123-8) of the driving boards (i.e., the third to eighth driving boards 120-3 to 120-8) included in each of the second to fourth display devices 100-2 to 100-4 to transmit the image quality data. Here, the first timing controller 123-1 of the first driving board 120-1 may request only to the timing controllers (i.e., the third, fifth, and seventh timing controllers 123-3, 123-5, and 123-7) of the primary driving boards (i.e., the third, fifth, and seventh driving boards 120-3, 120-5, and 120-7) included in each of the second to fourth display devices 100-2 to 100-4 to transmit the location data.

However, the disclosure is not limited thereto, and the first timing controller 123-1 of the first driving board 120-1 may request to the timing controllers (i.e., the fourth, sixth, and eighth timing controllers 123-4, 123-6, and 123-8) of the secondary driving boards (i.e., the fourth, sixth, and eighth driving boards 120-4, 120-6, and 120-8) included in each of the second to fourth display devices 100-2 to 100-4 to transmit the location data through the timing controllers (i.e., the third, fifth, and seventh timing controllers 123-3, 123-5, and 123-7) of the primary driving boards (i.e., the third, fifth, and seventh driving boards 120-3, 120-5, and 120-7) included in each of the second to fourth display devices 100-2 to 100-4.

Then, the timing controller 123 may select a display device which is not to be requested to transmit the image quality data of the modular display device 10 among the remaining display devices based on each of the received location data.

Specifically, if an error is detected in each of the received location data or a driving board that did not receive the location data is identified, the timing controller 123 does not request the timing controller of the driving board to transmit the image quality data. This is because, in case an error is detected in the location data received from the timing controller of a specific driving board, an error may also be included in the image quality data received by the timing controller 123. Also, this is because, in case the location data cannot be received from the timing controller of a specific driving board, transmission of the image quality data can also become impossible.

In particular, the timing controller 123 may compare each of the received location data with the location data stored in the at least one non-volatile memory 122, and select a display device including the newly installed driving board among the remaining display devices. Then, the timing controller may not make a request to the selected display device to transmit the image quality data.

Specifically, the timing controller 123 may compare the location data received from each driving board included in the remaining display devices with the location data stored in the at least one non-volatile memory 122. Here, the location data stored in the at least one non-volatile memory 122 may be location data that was changed to a valid value as it was identified that the driving board was newly installed in the display device.

For example, referring to FIG. 7, in case the first timing controller 123-1 of the first driving board 120-1 identified that the first driving board 120-1 is newly installed in the first display device 100-1, the location data stored in the EEPROM 122-1 of the first driving board 120-1 may be a "primary" value changed from a none value.

Then, the timing controller 123 may compare the location data received from the remaining display devices (more specifically, the location data received from each driving board included in the remaining display devices) with the location data stored in the at least one non-volatile memory 122, and select a display device including the newly installed driving board among the remaining display devices.

Specifically, the timing controller 123 may select a driving board that was newly installed in a display device (i.e., any one display device among the remaining display devices) among each driving board included in the remaining display devices.

For example, referring to FIG. 7, the first timing controller 123-1 of the first driving board 120-1 may compare the location data received from the timing controllers (i.e., the third to eighth timing controllers 123-3 to 123-8) of the plurality of driving boards (i.e., the third to eighth driving boards 120-3 to 120-8) included in the second to fourth display devices 100-2 to 100-4 with the location data ("primary") stored in the EEPROM 122-1 of the first driving board 120-1. Then, the first timing controller 123-1 of the first driving board 120-1 may identify a driving board that was newly installed in a display device (any one display device among the second to fourth display devices 100-2 to 100-4) among the plurality of driving boards (i.e., the third to eighth driving boards 120-3 to 120-8). In particular, the first timing controller 123-1 of the first driving board 120-1 may identify a driving board of a timing controller that transmitted location data of a "none" value as a driving board that was newly installed in a display device (any one display device among the second to fourth display devices 100-2 to 100-4). For this, in the location data received by the first timing controller 123-1 of the first driving board 120-1, the IP address information of the display devices (the second to fourth display devices 100-2 to 100-4) wherein each driving board (the third to eighth driving boards 120-3 to 120-8) is installed may be included. Here, if it is identified that the location data transmitted by the fifth timing controller 123-5 of the fifth driving board 120-5 (i.e., the location data stored in the EEPROM 122-9 of the fifth driving board 120-5) included in the third display device 100-3 is a none value, the first timing controller 123-1 of the first driving board 120-1 may identify that the fifth driving board 120-5 was newly installed in the third display device 100-3.

Then, the timing controller 123 does not request to the display device including the newly installed driving board to transmit the image quality data. Specifically, in at least one non-volatile memory of a driving board that was newly installed in a display device, image quality data may not be stored, and thus the timing controller 123 does not request to the timing controller of the newly installed driving board to transmit the image quality data. Explaining again based on the aforementioned example, if it is identified that the fifth driving board 120-5 was newly installed in the third display device 100-3, the first timing controller 123-1 of the first driving board 120-1 does not request to the fifth driving board 120-5 to transmit the image quality data.

Meanwhile, the timing controller 123 may sequentially request to the remaining display devices to transmit the location data of the driving boards according to the IP addresses allotted to each of the display devices. As an example, to each of the plurality of display devices, a different IP address may be allotted. Accordingly, the timing controller 123 may sequentially request to the remaining display devices to transmit the location data based on the allotted IP addresses of the remaining display devices.

Specifically, the timing controller 123 may set a request order of the location data based on the IP addresses set to the remaining display devices. Then, the timing controller 123 may sequentially request to the timing controllers of the plurality of driving boards included in each of the remaining display devices to transmit the location data according to the set request order.

Here, in the case that it is identified that the received location data has a none value or at least one driving board included in a specific display device (i.e., any one display device among the remaining display devices) is newly installed based on the received location data, the timing controller 123 may request to the timing controllers of the plurality of driving boards included in another display device in the next order of the specific display device to transmit the location data. In contrast, in the case that it is identified that the received location data has an effective value ("primary" or "secondary") or the plurality of driving boards included in a specific device (i.e., any one display device among the remaining display devices) were previously installed based on the received location data, the timing controller 123 may receive the image quality data from at least one driving board among the plurality of driving boards included in the specific display device (i.e., any one display device among the remaining display devices).

For example, referring to FIG. 7, if it identified that the first driving board 120-1 is newly installed in the first display device 100-1, the first timing controller 123-1 of the first driving board 120-1 may set the request order of the location data as the order from the second display device 100-2 to the fourth display device 100-4 based on the IP addresses allotted to the second to fourth display devices 100-2 to 100-4. Accordingly, the first timing controller 123-1 of the first driving board 120-1 may request to the third and fourth timing controllers 123-3 and 123-4 of the third and fourth driving boards 120-3 and 120-4 included in the second display device 100-2 to transmit the location data. Then, if it is identified that any one of the third and fourth driving boards 120-3 and 120-4 is newly installed in the second display device 100-2, the first timing controller 123-1 of the first driving board 120-1 does not request to the third and fourth timing controllers 123-3 and 123-4 of the third and fourth driving boards 120-3 and 120-4 to transmit the image quality data.

Then, the first timing controller 123-1 of the first driving board 120-1 may request to the fifth and sixth timing controllers 123-5 and 123-6 of the fifth and sixth driving boards 120-5 and 120-6 included in the third display device 100-3 in the next order to transmit the location data. Meanwhile, if it is identified that both of the third and fourth driving boards 120-3 and 120-4 were previously installed in the second display device 100-2, the first timing controller 123-1 of the first driving board 120-1 may request to the third and fourth timing controllers 123-3 and 123-4 of the third and fourth driving boards 120-3 and 120-4 to transmit the image quality data.

Meanwhile, in the aforementioned embodiment, it was explained that, if it is identified that at least one driving board among the plurality of driving boards included in any one display device among the remaining display devices was newly installed, the timing controller 123 does not request to transmit the image quality data, but the disclosure is not limited thereto. That is, if it is identified that any one driving board among the plurality of driving boards included in any one display device among the remaining display devices was previously installed in the display device, the timing controller 123 may request to the timing controller of the any one driving board that was identified to have been previously installed to transmit the image quality data.

Meanwhile, the request order of the location data that was set based on IP addresses may also be set as the order of the primary driving board and the secondary driving board in the same display device. That is, referring to FIG. 7, the request order of the location data may be subdivided into the order of the third timing controller 123-3 of the third driving board 120-3 of the second display device 100-2, and the timing controller 123-4 of the fourth driving board 120-4 of the second display device 100-2.

Meanwhile, the timing controller 123 may store the image quality data received from the remaining display devices in the at least one non-volatile memory 122 in operation S840. Specifically, the timing controller 123 may use the image quality data received from the timing controllers of the driving boards included in each of the remaining display devices in the at least one non-volatile memory 122, and then use the data in controlling the display modules of the display device. As an example, the timing controller 123 may store the received image quality data in the flash memory included in the at least one memory 122.

For example, the first timing controller 123-1 of the first driving board 120-1 may store the image quality data received from the timing controllers (i.e., the third to eighth timing controllers 123-3 to 123-8) of the driving boards (i.e., the third to eighth driving boards 120-3 to 120-8) of the second to fourth display devices 100-2 to 100-4 in the flash memory 122-2 of the first driving board 120-1. Then, the first timing controller 123-1 of the first driving board 120-1 may correct or control the gray scale, the luminance, etc. output from the plurality of pixels (and the plurality of light-emitting elements corresponding to the plurality of pixels) included in the plurality of display modules corresponding to the first driving board 120-1 based on the image quality data stored in the flash memory 122-2.

Meanwhile, the various embodiments described above may be implemented in a recording medium that can be read by a computer or a device similar to a computer, by using software, hardware, or a combination thereof. In some cases, the embodiments described in this specification may be implemented as a processor itself. According to implementation by software, the embodiments such as procedures and functions described in this specification may be implemented as separate software modules. Each of the software modules can perform one or more functions and operations described in this specification.

Meanwhile, computer instructions for performing processing operations of the electronic device according to the aforementioned various embodiments of the disclosure may be stored in a non-transitory computer-readable medium. Computer instructions stored in such a non-transitory computer-readable medium make the processing operations at the display device 100 according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and a memory. As specific examples of a non-transitory computer-readable medium, there may be a CD, a DVD, a hard disc, a blue-ray disc, a USB, a memory card, a ROM and the like.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the scope of the invention as claimed by the appended claims.

## Claims

1. A driving board for a display device which forms part of a modular display device that includes a plurality of display devices, the driving board comprising:
a connector;
at least one non-volatile memory; and
a timing controller that controls light emission of a plurality of pixels included in a display module of the display device,
wherein the timing controller is configured to:
at the time of booting of the driving board, obtain location data of the driving board based on a signal input through the connector,
compare the obtained location data with location data stored in the at least one non-volatile memory, and identify whether the driving board is newly installed in the display device based on the comparison,
based on identifying that the driving board is newly installed in the display device, receive image quality data of the modular display device stored in other ones of the display devices of the modular display devicethrough the connector, and
store the received image quality data in the at least one non-volatile memory.

2. The driving board of claim 1,
wherein the timing controller is configured to identify that the driving board is newly installed in the case that the stored location data comprises a value indicating the absence of valid location data and the obtained location data comprises a valid value for the location data based on the signal input through the connector,
the timing controller being further configured to change the location data of the driving board stored in the at least one non-volatile memory to the obtained location data.

3. The driving board of claim 1 or 2,
wherein the timing controller is configured to:
based on the signal input through the connector being a first signal, identify that the driving board is a first driving board connected with the other display devices through the connector, and
based on the signal input through the connector being a second signal different from the first signal, identify that the driving board is a second driving board connected with the first driving board through the connector.

4. The driving board of claim 3,
wherein the timing controller is configured to:
based on identifying that the driving board is the second driving board, request to the first driving board to transmit the image quality data of the modular display device through the connector, wherein
the image quality data of the modular display device is received from at least one of the other display devices by the first driving board through the connector of the first driving board.

5. The driving board of claim 3,
wherein the timing controller is configured to:
based on identifying that the driving board is the first driving board of the display device, request to transmit the image quality data of the modular display device to the other display devices through the connector.

6. The driving board of any one of the preceding claims,
wherein the timing controller is configured to:
based on identifying that the driving board is newly installed in the display device,
receive the location data of the driving board included in each of the other display devices from each of the other display devices through the connector, and
select a first display device that is not to be requested to transmit the image quality data of the modular display device among the other display devices based on the received location data.

7. The driving board of claim 6,
wherein the timing controller is configured to:
compare each of the received location data with the location data stored in the at least one non-volatile memory, and select a first display device including the newly installed driving board among the other display devices, and not request to the selected first display device to transmit the image quality data.

8. The driving board of claim 6,
wherein, **IP** addresses different from one another are allotted to the plurality of display devices,, and
the timing controller is configured to:
sequentially request to the other display devices to transmit the location data of the driving boards according to the **IP** address allotted to each of the display devices.

9. The driving board of any one of the preceding claims,
wherein the at least one non-volatile memory comprises:
a flash memory; and
an EEPROM storing the location data, and
the timing controller is configured to:
store the received image quality data in the flash memory.

10. A method for controlling a driving board included in a display device among a plurality of display devices constituting a modular display device, the method comprising:
at the time of booting of the driving board, obtaining location data of the driving board based on a signal input through a connector of the driving board;
comparing the obtained location data with location data stored in at least one non-volatile memory of the driving board, and identifying whether the driving board is newly installed in the display device based on the comparison;
based on identifying that the driving board is newly installed in the display device, receiving image quality data of the modular display device stored in other display devices of the modular display device through the connector; and
storing the received image quality data in the at least one non-volatile memory.

11. The controlling method of claim 10,
wherein identifying that the driving board is newly installed in the display device comprises:
identifying that the location data of the driving board is a valid value based on the signal input through the connector and that the data stored in the at least one non volatile memory indicates the absence of valid location data, further comprising changing the location data of the driving board stored in the at least one non-volatile memory to the value of the obtained location data in response to identifying that the driving board is newly installed in the display device..

12. The controlling method of claim 10 or 11, comprising:
based on the signal input through the connector being a first signal, identifying that the driving board is a first driving board connected with the other display devices through the connector; and
based on the signal input through the connector being a second signal different from the first signal, identifying that the driving board is a second driving board connected with the first driving board through the connector.

13. The controlling method of claim 12, further comprising:
based on identifying that the driving board is the second driving board of the display device, requesting to the first driving board to transmit the image quality data of the modular display device through the connector, wherein
the image quality data of the modular display device is received from at least one of the other display devices by the first driving board through the connector of the first driving board.

14. The controlling method of claim 12, further comprising:
based on identifying that the driving board is the first driving board of the display device, requesting to the other display devices to transmit the image quality data of the modular display device through the connector.

15. The controlling method of any one of claims 10 to 14, further comprising:
based on identifying that the driving board is newly installed in the display device,
receiving the location data of the driving board included in each of the other display devices from each of the other display devices through the connector; and
selecting a first display device that is not to be requested to transmit the image quality data of the modular display device among the other display devices based on the received location data.
